# EUROPEAN PATENT SPECIFICATION

(11) **EP 1 437 050 B1**
(45) Date of publication and mention of the grant of the patent: **21.03.2007**
(21) Application number: 02770222.4
(22) Date of filing: 26.09.2002
(51) Int. Cl.: A23L 1/28, A23L 1/30

(54) **PROCESS FOR PRODUCING BREWER'S YEAST OR BREWER'S YEAST EXTRACT WITH IMPROVED FLAVOUR**
VERFAHREN ZUR HERSTELLUNG VON BRAUHEFE BZW. BRAUHEFEEXTRAKT MIT VERBESSERTEM GESCHMACK
PROCESSUS DE PRODUCTION DE LEVURE DE BRASSEUR OU EXTRAIT DE LEVURE DE BRASSEUR A SAVEUR AMELIOREE

(30) Priority: 27.09.2001 JP 2001295199
(43) Date of publication of application: 14.07.2004
(73) Proprietor: Amano Enzyme Inc., Nagoya-shi, Aichi 460-8630 (JP)
(72) Inventor: TSURUHAMI, Kazutaka, Amano Enzyme Inc., Kakamigahara-shi, Gifu 509-0108 (JP); KOIKEDA, Satoshi, Amano Enzyme Inc., Kakamigahara-shi, Gifu 509-0108 (JP)
(74) Representative: Bublak, Wolfgang
(86) International application number: PCT/JP2002/010025
(87) International publication number: WO 2003/028482

(56) References cited:
- EP-A- 1 118 667
- WO-A1-01/73102
- JP-A- 53 081 683
- JP-A- 63 022 177
- GUO W ET AL: "ISOLATION AND CHARACTERIZATION OF A BETA-PRIMEVEROSIDASE CONCERNED WITH ALCOHOLIC AROMA FORMATION IN TEA LEAVES" BIOSCIENCE BIOTECHNOLOGY BIOCHEMISTRY, JAPAN SOC. FOR BIOSCIENCE, BIOTECHNOLOGY AND AGROCHEM. TOKYO, JP, vol. 60, no. 11, November 1996 (1996-11), pages 1810-1814, XP001079442 ISSN: 0916-8451

## Description

The present invention relates to a method for producing brewer's yeast or brewer's yeast extract having an improved flavor more particularly, to a method for producing brewer's yeast or brewer's yeast extract having a reduced bitterness or enriched body and a method for producing the same as well as an agent for improving the flavor.

A brewer's yeast contains proteins, vitamin Bs such as thiamine, riboflavin, nicotinic acid and the like, minerals such as phosphorus, potassium, calcium and magnesium as well as saccharides, and the useful ingredients contained in said brewer's yeast-attract an attention, based on which a brewer's yeast or a brewer's yeast extract derived from said brewer's yeast is utilized as a food, nutrition supplement or pharmaceutical.

On the other hand, a brewer's yeast obtained in a brewing process or a brewer's yeast extract derived from said brewer's yeast is associated with a bitterness which is attributable to a hop resin and the like employed in the brewing process, and such a bitterness should be reduced or eliminated for the purpose of using it generally as a food in a large amount.

While the bitterness of the brewer's yeast has conventionally been removed frequently by washing with an alkaline aqueous solution, a method for removing the bitterness of a brewer's yeast by subjecting a brewer's yeast obtained in the brewing process to a water vapor distillation with or without an organic solvent treatment was also reported (JP-A-63-22177).

However, an alkaline aqueous solution washing is not expected to be successful in achieving a high yield or a sufficient bitterness-removing effect due to the impairment of a yeast cell, the loss of active ingredients, the complicated procedure and the like.

In the method which subjects a brewer's yeast obtained in the brewing process to a water vapor distillation with or without an organic solvent treatment reported in JP-A-63-22177, the operations of the water vapor distillation and the organic solvent treatment should newly be introduced, which may pose a risk of affecting the beer is natural flavor adversely.

Moreover, the treatment with an organic solvent is associated with a requirement of a complicated procedure for removing the organic solvent from the brewer's yeast in order to avoid any problems of the residual solvent. Furthermore, JP-A-53-081683 discloses an improved brewer's yeast obtained by contacting with hemicellulase.

Accordingly, an objective of the present invention is to provide a method for producing brewer's yeast or brewer's yeast extract having an excellent flavor by simple procedure without any disadvantage such as an impairment of the yeast cell.

The present invention relates to a method for producing brewer's yeast or brewer's yeast extract having an improved flavor which comprises treating a brewer's yeast with a diglycosidase. As a result, a product, nutrition supplement or pharmaceutical readily palatable can be obtained. In addition, such an inventive brewer's yeast or brewer's yeast extract can exhibit a reduced bitterness and an enriched body.

As a result, a brewer's yeast or brewer's yeast extract having an improved flavor can be produced by a simple manufacturing process. In addition, such an inventive method for producing brewer's yeast or brewer's yeast extract can produce a brewer's yeast or brewer's yeast extract especially having a reduced bitterness and an enriched body.

As used herein, a "brewer's yeast" means a yeast capable of an alcohol fermentation of a saccharified solution obtained by subjecting a malt-derived starch to the effect of a malt-derived saccharification enzyme, and is preferably a brewer's yeast which is employed in a brewing process and obtained as a by product of said process. Said brewer's yeast may usually be a Saccharomyces microorganism, which may be any species or strain employed widely in the brewing process. For example, a commercially available dried brewer's yeast (KIRIN-ASPURO) may be mentioned.

As used herein, a "brewer's yeast extract" means an autolytic fluid or a hot water extract of a brewer's yeast, including concentrated or powdered product thereof which are commercially available. For example, a commercially available brewer's yeast extract is MEAST PIG (Asahi Food & Healthcare), Super MEAST Powder A-001 (Asahi Food & Healthcare), AMBEREX 100 3A (Red Star Bioproducts) and the like.

As used herein, an "improved flavor" means an improvement in the flavor possessed by a brewer's yeast or brewer's yeast extract, including the bitterness or the body. With an inventive brewer's yeast or brewer's yeast extract and a method for producing the same and an agent for improving the flavor, an improve flavor is experienced especially as a reduced bitterness or an enriched body.

In the present invention, a diglycosidase means an enzyme is classified as a saccharide chain-hydrolyzing enzyme, which is an enzyme capable of using as a substrate a glycoside formed as a result of the binding between a compound other than saccharides as constituents of the glycoside (hereinafter referred to as "aglycon") and a straight and branched saccharide chains comprising a single or several saccharides via a hydroxyl group of the saccharide chain, and also which recognizes the substrate on the basis of the disaccharide unit to effect a cleavage whereby forming the aglycon.

A diglycosidase capable of being used in the present invention may be any diglycosidase whose diglycosidase activity has been identified, for example, that produced by any of various microorganisms classified to the genera of Aspergillus, Penicillium, Rhizopus, Rhizomucor, Talaromyces, Mortierella, Cryptococcus, Microbacterium, Corynebcterium, Actinoplanes and the like.

Diglycosidases are described e.g. in EP-A-1 118 667 and Guo et al. in Biosci. Biotech. Biochem. 60 (11), 1810-1814, 1996.

A more preferred diglycosidase may for example be a diglycosidase whose diglycosidase-producing ability has been identified, such as those produced by Aspergillus niger IFO4407 (from Institute for Fermentation, 2-17-85, Juso-honmachi, Yodogawa-ku, OSAKA), Aspergillus niger IAM2020, Aspergillus fumingatus IAM2046, Penicillium multicolor IAM7153 (from Institute of Molecular and Cellular Biosciences of the Tokyo University, 1-1-1 YAYOI, BUNKYOKU, TOKYO).

An especially preferred diglycosidase is a diglycosidase produced by Penicillium multicolor IAM7153. Since the β-galactosidase derived from Penicillium multicolor is an enzyme whose safety has been established and which is found in a food additive listing, a di-glycosidase produced by such a highly safe microorganism may also be expected to be highly safe.

In order to produce a diglycosidase using any of various microorganisms described above, a method and conditions suitable for the culture of such a microorganism can be selected. For example, a method for culturing any of the microorganisms described above may be a liquid culture or solid culture, with a liquid culture being preferred. The liquid culture can be conducted, for example, by the following procedure.

A culture medium may be any medium capable of allowing a diglycosidase-producing microorganism to be grown. For example, one supplemented with a carbon source such as glucose, sucrose, gentiobiose, soluble starch, glycerin, dextrin, syrup, organic acids and the like, a nitrogen source such as ammonium sulfate, ammonium carbonate, ammonium phosphate, ammonium acetate, peptone, yeast extract, corn steep liquor, casein hydrolysate, rice bran, meat extract and the like, as well as an inorganic salt such as a potassium salt, magnesium salt, sodium salt, phosphate, manganese salt, iron salt, zinc salt and the like may be employed.

Also in order to produce and accumulate a diglycosidase, various inducing substances may be added to a culture medium. Such an inducing substance may, for example, be a saccharide, preferably a gentose (for example gentose #80, NIHON SHOKUHIN KAKO), gentiobiose, gentiooligosaccharide (for example, gentiooligosaccharide from Wako Pure Chemical Industries), galactomannan and the like.

While the amount of such an inducing substance may not be limited particularly as long as it serves to increase the intended diglycosidase-producing ability, it is preferably 0.01 to 10%.

The pH of a culture medium may be adjusted, for example, at about 3 to 8, preferably about 5 to 6, and the incubation temperature is usually about 10 to 50°C, preferably about 25 to 30°C, at which the culture is conducted for 1 to 15 days, preferably 4 to 7 days under an aerobic condition. The culture method may, for example, be an agitating culture and an aerobic deep culture using a jar fermenter. Nevertheless, various culture conditions mentioned above may vary depending on the microorganism and cell to be cultured, and the condition is not limited as long as it allows an inventive diglycosidase to be produced.

In order to isolate and purify a diglycosidase from the resultant culture fluid, a combination, based on the diglycosidase activity as an index, of various methods such as a centrifugation, UF concentration, salting out, ion exchange resin chromatography and the like, may be employed in accordance with a standard method, whereby obtaining a purified diglycosidase (see, Basic experimental methods of proteins and enzymes, T.HORIO, NANKODO). An inventive diglycosidase may be a culture fluid itself in which a microorganism producing a diglycosidase mentioned above has been incubated. It is a matter of course that such a culture fluid may be purified to a certain degree suitable for an intended use, and a crude diglycosidase in Reference Example 1 described below may also be employed equivalently to a purified diglycosidase in the present invention.

In the method for producing an inventive brewer's yeast or brewer's yeast extract, the unit of amount of a diglycosidase to be used when subjecting the brewer's yeast or brewer's yeast extract to the effect of the diglycosidase is usually 0.01 to 6000 units, preferably 0.1 to 3000 units, more preferably 1 to 1500 units, especially 10 to 600 units. A unit of amount of the diglycosidase to be used less than the level specified above may lead to a difficulty in obtaining an intended flavor-improving effect, while one exceeding the level specified above may allow a natural flavor of the brewer's yeast or brewer's yeast sex-tract to be affected adversely due to the contaminants contained in the diglycosidase.

A medium employed in the reaction with a diglycosidase may be any solvent which allows a flavor-improving effect of the diglycosidase to be exerted, and is preferably water. For example, a brewer's yeast or brewer's yeast extract may be suspended or dissolved in said solvent, preferably water, whereby reacting the diglycosidase.

The temperature at which a diglycosidase is reacted is usually 20 to 70°C, preferably 30 to 65°C, more preferably 40 to 60°C, especially 50 to 55°C. A reaction temperature below the level specified above may lead to an insufficient exertion of the effect of the diglycosidase which results in a difficulty in obtaining a flavor-improving effect, while a temperature higher than the level specified above may lead to a inactivation of the diglycosidase and a heat denaturation of the brewer's yeast or brewer's yeast extract which results in a difficulty in obtaining a sufficient flavor-improving effect. For terminating the effect of the diglycosidase, any enzyme inactivation method employed ordinarily can be conducted, such as an addition of an acid or alkali, heating and the like, with a heat inactivation being preferred. For example, the heat inactivation at 70°C for 30 minutes serves to inactivate the diglycosidase activity.

The pH at which a diglycosidase is reacted is usually 2.0 to 8.0, preferably 3.0 to 7.0, more preferably 4.0 to 6.0, especially 4.5 to 5.5. A reaction pH lower than the level specified above may lead to an insufficient exertion of the effect of the glycosidase which results in a difficulty in obtaining a flavor-improving effect, while a pH higher than the level specified above may lead to a denaturation of the brewer's yeast or brewer's yeast extract which results in a difficulty in obtaining a sufficient flavor-improving effect.

A suspension or solution of a brewer's yeast or brewer's yeast extract having an improved flavor obtained by a treatment with a diglycosidase can be concentrated by an ordinary method such as ultrafiltration, and may also be dried and powdered by a lyophilization or spray drying to yield a powder.

A substance responsible for the bitterness which in included in the flavor to be improved according to the present invention may, for example, be, but not limited to, a glycoside derived from a malt which exhibits a bitterness.

In the method for producing an agent for imparting a brewer's yeast or brewer's yeast extract with an improved flavor according to the present invention, a diglycosidase, alone or in combination with other additives, may be converted into any desired form such as a solid including a powder or granule, a semi-solid including a paste, a liquid including a solution or suspension by a standard technology. Such an additive may, for example, be a component acceptable in an enzymatic formulation, and may be selected in view of the desired form.

The amount of the diglycosidase employed in an agent for imparting a brewer's yeast or brewer's yeast extract with an improved flavor according to the present invention is similar to the unit of amount of a diglycosidase employed in a method for producing an inventive brewer's yeast or brewer's yeast extract having an improved flavor according to the present invention described above.

An agent for imparting a brewer's yeast or brewer's yeast extract with an improved flavor of the present invention can be used similarly to the case where a diglycosidase is reacted in a method for producing a brewer's yeast or brewer's yeast extract with an improved flavor of the present invention described above.

Unless otherwise specified, a % in the description below is a % (w/v).

### Reference Example 1 (Incubation of diglycosidase employing Penicillium multicolor strain IAM7153)

### (1) Culture

A growth medium (pH 5.6) containing 2.0% Defatted soybean, 3.0% glucose, 0.5% potassium dihydrogen phosphate, 0.4% ammonium sulfate and 0.3% dried yeast was sterilized at 121°C for 20 minutes. A 100 ml aliquot of the sterilized medium was inoculated with one platinum loop-full of a producer microorganism, which was subjected to a preliminary incubation at the agitation rate of 140 min⁻¹ at 27°C. After 5 days, 20 L of a main medium at pH4.9 containing 1.0% SUNFIBER R, 2.0% potassium dihydrogen phosphate, 1.0% ammonium sulfate, 3.13% MEAST PIG was placed in a 30 L jar fermenter, where a sterilization was effected for 20 minutes at 121°C with agitating at 150 min⁻¹. This main growth medium was inoculated with the preliminarily incubated medium described above at 1.5% (v/v), and incubated for 8 days at 27±1°C under the internal pressure of 0.5 Kg/cm² (48kPa) at the aeration rate of 0.77 vvm (15 L/min) with agitating at 250 min⁻¹.

### (2) Purification of diglycosidase

An incubation broth was supplemented with filtration aids GEMLITE SUPER 56M and FineFlow A each at 2% based on the entire fluid, and subjected to a filtration through a kieselguhr. A 20-fold concentration was effected using an ultrafiltration membrane UF AIP-2020 (MW 6,000) followed by a replacement with a 20 mM acetate buffer at pH4.7. The broth was made aseptic by a filtration, and lyophilized to obtain a crude di-glycosidase. The ultrafiltration concentrate obtained as described above was supplemented with ammonium sulfate, whereby effecting a salting out with a 50% saturated ammonium sulfate. The precipitate obtained was removed, and the supernatant was combined with ammonium sulfate to effect a salting out with a 80% saturated ammonium sulfate. The precipitate was recovered, and dissolved in a 20 mM acetate buffer at pH4.7. The solution was loaded onto a 10-DG column (BioRad Co.), and the buffer solution was exchanged with a 20 mM acetate buffer at pH 4.7 containing 30%-saturated ammonium sulfate. This solution was applied onto a hydrophobic chromatography (HiLoad 16/10 Phenyl Sepharose High Performance (Pharmacia)) to separate a diglycosidase activity fraction from the β-glucosidase and β-xylosidase activity fractions. The elution was initiated at room temperature at the flow rate of 2 ml/min with a 20 mM acetate buffer containing 30%-saturated ammonium sulfate then subjected to a linear gradient of 30 to 0%-saturated ammonium sulfate. A diglycosidase activity fraction was eluted at 10 to 12.5%-saturated ammonium sulfate concentration. The recovered diglycosidase fraction was concentrated, centrifuged to obtain a supernatant, which was then loaded onto a 10-DG column, while the solution was exchanged with a 25 mM tris HCl buffer at pH7.1. This solution was applied onto an isoelectric point chromatography (Mono-P HR5/10 (Pharmacia)) and the elution was initiated at room temperature at the flow rate of 1 ml/min with POLYBUFFER 74 at pH5.0. An intended di-glycosidase activity was eluted at pH6.2 to pH6.3. Since this fraction exhibited a single band in an SDS electrophoresis, it was proven that the diglycosidase was purified. This glycosidase is also hereinafter referred to as a purified glycosidase.

### (3) Diglycosidase activity measurement

Using an automatic chemical analyzer (TOSHIBA, TBA-30R), 30 µl of a diglycosidase sample is mixed with 200 µl of a 2mM solution of p-nitrophenyl (pNP) primeveroside in an acetate buffer (pH5.5) and reacted for 9.75 minutes with the cycle time of 22.5 seconds at 40°C, and then combined with 250 µl of sodium carbonate and examined for the absorbance at 412 nm. A sample-derived blank is measured by using a 20 mM acetate buffer (pH5.5) instead of the substrate solution. Under this condition, the amount of the enzyme which increases the absorbance by 1 is regarded as 1 unit.

The above-mentioned PNP-primeveroside was synthesized by reacting pNP-glucoside (Merck) with a xyloorigosaccharide (Wako Pure Chemical Industries) using an enzyme xylosidase (Sigma) whereby effecting a single-residue transfer of the xylose via β-1,6 bond to the pNP-glucoside.

### EXAMPLE 1 (Preparation of brewer's yeast or brewer's yeast extract having improved flavor using crude di-glycosidase)

1 g of a dried brewer's yeast (KIRIN-ASUPRO, the same applies analogously to the following description) was suspended in 47.5 ml of a purified water, to which 2.5 ml of a crude diglycosidase solution (127 unit/ml) was added and the mixture was shaken for 3 hours at 55°C, and then treated for 30 minutes at 70°C to inactivate the enzyme, whereby preparing a crude diglycsidase-treated brewer's yeast suspension, which was cooled to 20°C and used as a sample for the organoleptic evaluation described below in EXAMPLE 3.

Separately, 1 g of MEAST P1G (Asahi Food & Healthcare, the same applies analogously to the following description), 1 g of Super MEAST Powder A-001 Lot NO. 155LA (Asahi Food & Healthcare, the same applies analogously to the following description) and 1g of AMBEREX 1003AG (Red Star Bioproducts, the same applies analogously to the following description) were dissolved in 47.5 ml of a purified water, to which 2.5 ml of a crude diglycosidase solution (127 unit/ml) was added and the mixture was shaken for 3 hours at 55°C, and then treated for 30 minutes at 70°C to inactivate the enzyme, whereby preparing each of crude diglycosidase-treated MEAST P1G solution, Super MEAST powder A-001 Lot NO.155LA solution and AMBEREX 1003AG solution, each of which was cooled to 20°C and used as a sample for the organoleptic evaluation described below in EXAMPLE 3.

On the other hand, a crude diglycosidase non-treated brewer's yeast suspension, MEAST P1G solution and Super MEAST powder A-001 Lot NO. 155LA solution and AMBEREX 1003AG as control samples described below in EXAMPLE 3 were prepared as described below.

1g of a dried brewer's yeast was suspended in 50.0 ml of a purified water, and the mixture was shaken for 3 hours at 55°C, and then treated for 30 minutes at 70°C, whereby preparing a crude diglycosidase non-treated brewer's yeast suspension, which was cooled to 20°C and used as a control sample for the organoleptic evaluation described below in EXAMPLE 3. Separately, 1 g of MEAST P1G, 1 g of Super MEAST Powder A-001 Lot NO. 155LA and 1g of AMBEREX 1003AG were dissolved in 50.0 ml of a purified water, and the mixture was shaken for 3 hours at 55°C, and then treated for 30 minutes at 70°C, whereby preparing each of crude di-glycosidase non-treated MEAST P1G solution, Super MEAST powder A-001 NO. 155LA solution and AMBEREX 1003AG solution, each of which was cooled to 20°C and used as a control sample for the organoleptic evaluation described below in EXAMPLE 3.

### EXAMPLE 2 (Preparation of brewer's yeast or brewer's yeast extract having improved flavor using purified diglycosidase)

0.4 g of a dried brewer's yeast was suspended in 19 ml of a purified water, to which 1 ml of a purified diglycosidase solution (127 unit/ml) was added and the mixture was shaken for 3 hours at 55°C, and then treated for 30 minutes at 70°C to inactivate the enzyme, whereby preparing a purified diglycosidase-treated brewer's yeast suspension, which was cooled to 20°C and used as a sample for the organoleptic evaluation described below in EXAMPLE 3. Separately, 0.4 g of MEAST P1G, 0.4 g of Super MEAST Powder A-001 Lot NO. 155LA and 0.4 g of AMBEREX 1003AG were dissolved in 19 ml of a purified water, to which 1 ml of a purified diglycosidase solution (127 unit/ml) was added and the mixture was shaken for 3 hours at 55°C, and then treated for 30 minutes at 70°C to inactivate the enzyme, whereby preparing each of purified diglycosidase-treated MEAST P1G solution, Super MEAST powder A-001 Lot NO. 155LA solution and AMBEREX 1003AG solution, each of which was cooled to 20°C and used as a sample for the organoleptic evaluation described below in EXAMPLE 3.

On the other hand, a purified diglycosidase non-treated brewer's yeast suspension, MEAST P1G solution and Super MEAST powder A-001 Lot NO. 155LA solution and AMBEREX 1003AG as control samples described below in EXAMPLE 3 were prepared as described below.

1g of a dried brewer's yeast was suspended in 50.0 ml of a purified water, and the mixture was shaken for 3 hours at 55°C, and then treated for 30 minutes at 70°C to inactivate the enzyme, whereby preparing a purified diglycosidase non-treated brewer's yeast suspension, which was cooled to 20°C and used as a control sample for the organoleptic evaluation described below in EXAMPLE 3. Separately, 1 g of MEAST P1G, 1 g of Super MEAST Powder A-001 Lot NO. 155LA and 1g of AMBEREX 1003AG were dissolved in 50.0 ml of a purified water, and the mixture was shaken for 3 hours at 55°C, and then treated for 30 minutes at 70°C, whereby preparing each of purified diglycosidase non-treated MEAST P1G solution, Super MEAST powder A-001 Lot NO. 155LA solution and AMBEREX 1003AG solution, each of which was cooled to 20°C and used as a control sample for the organoleptic evaluation described below in EXAMPLE 3. EXAMPLE 3 (Organoleptic evaluation of crude diglycosidase-treated, purified diglycosidase-treated or diglycosidase non-treated dried brewer's yeast suspension, MEAST P1G solution, Super MEAST powder A-001 Lot NO. 155LA solution or AMBEREX 1003AG solution)

5 panelists (A to E) were included in an organoleptic evaluation of the samples obtained in Example 1 and Example 2 with regard to the bitterness and the body by a 5-point scoring method.

The evaluation criteria are as shown in Table 1 and Table 2, and the scores by 5 panelists were averaged and used for evaluating the intensity of the bitterness and the intensity of the body.

Thus, a higher value indicates a less intense (lower) bitterness or a more intense body. The results of the evaluation are shown in Table 3.

**Table 1 Bitterness evaluation criteria**

| Score | |
|---|---|
| 5 | Low bitterness |
| 4 | Slightly low bitterness |
| 3 | Moderate bitterness |
| 2 | Slightly intense bitterness |
| 1 | Intense bitterness |

**Table 2 Body evaluation criteria**

| Score | |
|---|---|
| 5 | Intense body |
| 4 | Slightly intense body |
| 3 | Moderate body |
| 2 | Slightly poor body |
| 1 | Poor body |

**Table 3 Flavor-improving effect of diglycosidase on brewer' s yeast or brewer's yeast extract**

| DGL treatment / DGL Non-treatment | Brewer's yeast/ Brewer's yeast extract | Panelist A | | Panelist B | | Panelist C | | Panelist D | | Panelist E | | Score Average | |
|---|---|---|---|---|---|---|---|---|---|---|---|---|---|
| | | Bitterness | Body | Bitterness | Body | Bitterness | Body | Bitterness | Body | Bitterness | Body | Bitterness | Body |
| Crude DGL treatment | Dried brewer's yeast | 5 | 4 | 4 | 5 | 4 | 4 | 5 | 4 | 5 | 4 | 4.6 | 4.2 |
| | RED STAR (AMBEREX) | 5 | 3 | 4 | 4 | 5 | 5 | 4 | 4 | 4 | 4 | 4.4 | 4.0 |
| | MEAST P1G | 5 | 5 | 5 | 5 | 4 | 5 | 4 | 5 | 4 | 4 | 4.4 | 4.8 |
| | Super MEAST powder | 5 | 4 | 4 | 4 | 4 | 5 | 5 | 4 | 5 | 5 | 4.6 | 4.4 |
| Purified DGL treatment | Dried brewer's yeast | 5 | 4 | 4 | 5 | 5 | 5 | 5 | 4 | 4 | 4 | 4.6 | 4.4 |
| | RED STAR (AMBEREX) | 4 | 3 | 5 | 4 | 5 | 4 | 4 | 5 | 5 | 4 | 4.6 | 4.0 |
| | MEAST P I G | 4 | 5 | 4 | 5 | 5 | 4 | 3 | 5 | 5 | 4 | 4.2 | 4.6 |
| | Super MEAST powder | 5 | 4 | 4 | 5 | 3 | 4 | 5 | 5 | 5 | 4 | 4.4 | 4.4 |
| DGL Non-treatment | Dried brewer's yeast | 2 | 2 | 3 | 2 | 2 | 2 | 2 | 3 | 3 | 3 | 2.4 | 2.4 |
| | RED STAR (AMBEREX) | 1 | 1 | 2 | 1 | 2 | 2 | 1 | 2 | 2 | 2 | 1.6 | 1.6 |
| | MEAST P1G | 2 | 3 | 2 | 2 | 1 | 3 | 2 | 3 | 1 | 2 | 1.6 | 2.6 |
| | Super MEAST powder | 2 | 2 | 3 | 3 | 2 | 2 | 2 | 2 | 3 | 2 | 2.4 | 2.2 |

| | | | | | | | | | | | | | |
|---|---|---|---|---|---|---|---|---|---|---|---|---|---|
| DLG: Diglycosidase , Crude DGL: Crude diglycosidase , Purified DGL: Purified diglycosidase | | | | | | | | | | | | | |

As evident from Table 3, each of the brewer's yeast (dried brewer's yeast) or brewer's yeast extract (AMBEREX 1003AG, MEAST P1G and Super MEAST powder A-001 Lot NO.155LA) treated with the crude diglycosidase and the purified diglycosidase exhibited a significantly reduced bitterness and enriched body when compared with those which had not been treated with the diglycosidase. Since the brewer's yeast or brewer's yeast extract treated with the crude diglycosidase exhibited the reduced bitterness and the enriched body almost equivalent to those treated with the purified diglycosidase, it was suggested that the diglycosidase itself is responsible for the reduction in the bitterness and the increase in the body.

The method for producing brewer's yeast or brewer's yeast extract can give a reduced bitterness and an enriched body of the brewer's yeast or brewer's yeast extract, and enables a wide application of the brewer's yeast or brewer's yeast extract to a palatable food product, nutrition supplement and pharmaceutical. The inventive method for producing a brewer's yeast or brewer's yeast extract does not require any complicated steps such as an alkaline aqueous solution treatment, water vapor distillation, organic solvent treatment and disposal of said solvent which have conventionally been required, whereby enabling a simplification of the manufacturing process of a brewer's yeast or brewer's yeast extract having a reduced bitterness and an enriched body.

## Claims

1. A method for producing a brewer's yeast comprising treating a brewer's yeast with a diglycosidase to obtain an improved flavor.

2. A method for producing a brewer's yeast extract comprising treating a brewer's yeast extract with a diglycosidase to improve the flavor.

3. A method for producing a brewer's yeast or brewer's yeast extract according to claim 1 or claim 2 wherein said improved flavor is a reduced bitterness.

4. A method for producing a brewer's yeast or brewer's yeast extract according to claim 1 or claim 2 wherein said improved flavor is an enriched body.

5. A method for producing a brewer's yeast or brewer's yeast extract according to claim 1 to claim 4 wherein said diglycosidase is derived from Penicillium multicolor.

6. A method for producing a brewer's yeast or brewer's yeast extract according to any claim 1 to claim 4 wherein said diglycosidase is derived from Aspergillus fumigatus.

## Patentansprüche

1. Verfahren zur Herstellung einer Bierhefe, umfassend die Behandlung einer Bierhefe mit einer Diglycosidase zum Erhalt eines verbesserten Geschmacks.

2. Verfahren zur Herstellung eines Bierhefeextrakts, umfassend die Behandlung eines Bierhefeextrakts mit einer Diglycosidase zum Erhalt eines verbesserten Geschmacks.

3. Verfahren zur Herstellung einer Bierhefe oder eines Bierhefeextrakts nach Anspruch 1 oder Anspruch 2, wobei es sich bei dem verbesserten Geschmack um reduzierte Bitterkeit handelt.

4. Verfahren zur Herstellung einer Bierhefe oder eines Bierhefeextrakts nach Anspruch 1 oder Anspruch 2, wobei es sich bei dem verbesserten Geschmack um einen angereicherten Körper handelt.

5. Verfahren zur Herstellung einer Bierhefe oder eines Bierhefeextrakts nach Anspruch 1 bis Anspruch 4, wobei die Diglycosidase von Penicillium multicolor abgeleitet ist.

6. Verfahren zur Herstellung einer Bierhefe oder eines Bierhefeextrakts nach einem der Ansprüche 1 bis Ansprüche 4, wobei die Diglycosidase von Aspergillus fumigatus abgeleitet ist.

## Revendications

1. Procédé pour produire une levure de bière comprenant le traitement d'une levure de bière avec une diglycosidase pour obtenir une saveur améliorée.

2. Procédé pour produire une levure de bière comprenant le traitement d'un extrait de levure de bière avec une diglycosidase pour améliorer la saveur.

3. Procédé pour produire une levure de bière ou un extrait de levure de bière selon la revendication 1 ou la revendication 2, dans lequel ladite saveur améliorée est une amertume réduite.

4. Procédé pour produire une levure de bière ou un extrait de levure de bière selon la revendication 1 ou la revendication 2, dans lequel ladite saveur améliorée est un corps enrichi.

5. Procédé pour produire une levure de bière ou un extrait de levure de bière selon les revendications 1 à 4, dans lequel ladite diglycosidase est obtenue à partir de Penicillium multicolor.

6. Procédé pour produire une levure de bière ou un extrait de levure de bière selon l'une ou l'autre des revendications 1 à 4, dans lequel ladite diglycosidase est obtenue à partir d'Aspergillus fumigatus.
